(19) **Europäisches Patentamt / European Patent Office / Office européen des brevets**

(11) **EP 1 188 074 B1**

(12) **FASCICULE DE BREVET EUROPEEN**

(45) Date de publication et mention
de la délivrance du brevet:
**06.06.2007 Bulletin 2007/23**

(51) Int Cl.:
*G01V 9/02* *(2006.01)*    *G01V 8/02* *(2006.01)*
*E03B 3/06* *(2006.01)*    *E21B 43/01* *(2006.01)*

(21) Numéro de dépôt: **00929617.9**

(86) Numéro de dépôt international:
**PCT/FR2000/001305**

(22) Date de dépôt: **15.05.2000**

(87) Numéro de publication internationale:
**WO 2000/079309 (28.12.2000 Gazette 2000/52)**

(54) **Procédé de captage d'eau douce et de détection de source d'eau douce en mer**

Verfahren zum Auffangen und zur Detektion von Süsswasser im Meer

Method for tapping and detecting fresh water at sea

(84) Etats contractants désignés:
**AT BE CH CY DE DK ES FI FR GB GR IE IT LI LU MC NL PT SE**

(30) Priorité: **18.06.1999 FR 9907991**

(43) Date de publication de la demande:
**20.03.2002 Bulletin 2002/12**

(73) Titulaire: **NYMPHEA WATER**
**13685 AUBAGNE (FR)**

(72) Inventeur: **BECKER, Pierre**
**F-83149 Bras (FR)**

(74) Mandataire: **Domange, Maxime et al**
**Cabinet Beau de Lomenie,**
**232, avenue du Prado**
**13295 Marseille Cedex 08 (FR)**

(56) Documents cités:
**WO-A-93/11305**     **FR-A- 2 701 974**
**GB-A- 2 063 776**     **US-A- 3 664 136**
**US-A- 3 981 154**     **US-A- 5 166 622**

- **GUGLIELMI Y ET AL: "LOCATING AND ESTIMATING SUBMARINE FRESHWATER DISCHARGE FROM AN INTERSITIAL CONFINED COASTAL AQUIFER BY MEASUREMENTS AT SEA: EXAMPLE FROM THE LOWER VAR VALLEY, FRANCE" JOURNAL OF HYDROLOGY, NL,NORTH-HOLLAND, AMSTERDAM, vol. 190, no. 1-2, 1 mars 1997 (1997-03-01), pages 111-122, XP000890156 ISSN: 0022-1694**
- **MARINO C M ET AL: "FRESH WATER SPRINGS DETECTION AND DISCHARGE EVALUATION USING THERMAL I.R. SURVEYS ALONG SEA SHORES IN AREAS AFFECTED BY POOR PRECIPITATIONS" PROCEEDINGS OF THE INTERNATIONAL SYMPOSIUM ON REMOTE SENSING AND ENVIRONMENT, 1982, pages 635-642, XP000890051 Cairo, Egypt**

**Description**

La présente invention a pour objet un procédé de captage de source d'eau douce en mer.

Le secteur technique de l'invention est le domaine des procédés et/ou installations permettant d'une part de détecter et localiser, d'autre part de permettre le captage de source d'eau douce qui émergent en mer.

L'application principale de l'invention est la réalisation de véritables champs de production d'eau douce à partir de sources situées sous le niveau de la mer afin de procurer une telle eau aux populations habitant en particulier les zones semi-désertiques riveraines de bassins maritimes, tels que celui de la Méditerranée.

On connaît déjà différents procédés et dispositifs de captage de sources sous marines d'eau douce, tels que ceux décrits en particulier dans la demande de brevet FR2 701 974 déposée le 26/02/93 qui enseigne une structure à concavité dirigée vers le bas, coiffant une telle source, et dans laquelle l'eau douce est piégée en partie haute grâce à sa densité plus faible que celle de l'eau de mer : cette structure est ouverte en partie basse pour permettre l'évacuation de l'eau de mer et le remplissage par l'eau douce. L'eau douce est pompée dans la partie la plus élevée de la structure depuis un système de pompage installé en surface, au dessus et à l'aplomb de la paroi côtière contre laquelle est fixée ladite structure. Un tel procédé et dispositif sont plus particulièrement adaptés au captage d'eau douce le long des côtes mais ne peut pas être utilisé pour des sources situées en pleine mer et à grande distance de la côte. De plus, avant de pouvoir capter de telles sources d'eau douce, encore faut-il les avoir repérées ce qui est d'autant plus difficile quand on se trouve justement en pleine mer.

En effet, Il faut pouvoir dans un premier temps évaluer des zones de surface au dessous desquelles peuvent jaillir de telles sources d'eau douce depuis le fond de la mer, puis les confirmer et les localiser avec précision et dans un deuxième temps d'y installer des dispositifs de captage permettant de récupérer l'essentiel du débit de ladite source sans polluer cette eau douce avec l'eau de mer environnante et avec des moyens de mise en oeuvre simples et faciles d'installation pour ramener ladite eau douce ainsi captée vers le rivage, et ce même si la source en est très éloignée.

Selon un premier aspect, la présente invention fournit un procédé de captage d'eau douce en mer, tel que défini dans les revendications. Dans un mode de réalisation, on réalise les étapes dans lesquelles :

- on dispose à proximité, de préférence au plus proche, d'un point de résurgence d'eau douce localisé sur le fond de la mer, un premier lest à partir duquel on positionne à des distances données, d'autres lests secondaires formant une ligne fermée autour du premier lest et dudit point de résurgence d'eau douce;
- on descend à la verticale du premier lest un réservoir souple constitué d'une enveloppe apte à prendre une forme de cloche, le réservoir étant descendu plié, de préférence ferlé au moyen de liens, et lesté à sa partie basse;
- on déploie ladite enveloppe, en dépliant, de préférence en déferlant celle-ci, jusqu'à ce que la circonférence de son extrémité inférieure soit positionnée à une distance donnée desdits lests secondaires pour que ladite enveloppe adopte ladite forme de cloche, une forme de calotte sphérique, et,
- on recueille sous le réservoir souple ainsi installé l'eau douce.

Ladite enveloppe adopte ladite forme cloche sous la pression de l'eau qui la remplit.

On recueille l'eau douce, avec ou sans pompe, à l'aide d'une conduite débouchant à une première extrémité dans la partie supérieure de l'intérieur du réservoir, et à sa deuxième extrémité dans une zone à terre située sous le niveau de la mer, de préférence dans un conteneur.

Selon un premier mode de réalisation on installe une cheminée à l'intérieur dudit réservoir ouverte à sa partie supérieure et entourant au moins en partie de préférence la totalité de la résurgence d'eau douce. De préférence, la partie inférieure de ladite cheminée est étanche, au niveau du fond de la mer. Cette étanchéité permet, après une période initiale d'évacuation de l'eau de mer, d'éviter le contact du flux d'eau douce avec l'eau de mer pendant la remontée de l'eau douce dans la partie supérieure à l'intérieur du réservoir.

Après le déploiement de l'enveloppe jusqu'à ce que sa circonférence inférieure soit positionnée à une distance donnée desdits lests secondaires pour que celle-ci adopte ladite forme de cloche, on réalise une étanchéité de l'extrémité inférieure du réservoir au niveau du fond de la mer. Dans ce mode de réalisation, les lests secondaires permettent une reprise d'effort pour rapprocher l'extrémité inférieure du réservoir le plus près du fond de la mer, de manière à permettre la réalisation de l'étanchéité. Dans ce mode de réalisation, il n'est pas non plus indispensable d'installer une dite cheminée à l'intérieur du réservoir.

On réalise l'étanchéité dudit réservoir, au niveau du fond de la mer, en faisant épouser le relief au fond de la mer par la circonférence de l'extrémité inférieure de ladite cheminée ou dudit réservoir.

Selon la présente invention, on entend par "étanchéité" le fait qu'on empêche le contact entre l'eau à l'intérieur du réservoir ou de la cheminée avec l'eau à l'extérieur. Il peut s'agir d'une étanchéité totale ou d'une quasi-étanchéité qui permet d'éviter un mélange significatif et d'obtenir une eau douce sans mélange significatif avec l'eau de mer à l'extérieur.

Ledit réservoir souple est constitué d'une enveloppe à double paroi, de préférence compartimentée, dans laquelle on injecte un coulis de béton, de densité proche de 1, et ce après ledit déploiement de l'enveloppe, et de préférence après avoir réalisé une étanchéité de la circonférence à l'extrémité inférieure du réservoir au niveau du fond de la mer, quand le réservoir a pris sa dite forme de cloche sous la pression de l'eau douce qui le remplit.

De préférence, lorsqu'on descend le réservoir souple constitué d'une enveloppe apte à prendre une forme de cloche, ladite enveloppe est surmontée dans sa partie haute, qui reste ouverte, par un flotteur et, lorsque ladite enveloppe est déployée pour que l'enveloppe adopte ladite forme de cloche, on ferme la partie haute de la cloche par une soupape d'échappement des gaz pouvant être contenus dans l'eau douce, et on recueille sous le réservoir souple ainsi installé, l'eau douée.

Plus particulièrement, lorsque ledit réservoir souple constitué d'une enveloppe est descendu à la verticale du premier lest, sous forme ferlée, on fixe des élingues entre chaque lest secondaire et la circonférence de l'extrémité inférieure de la cloche, et on déferle celle-ci en tirant sur les élingues jusqu'à ce que ladite circonférence de l'extrémité inférieure soit positionnée à une distance donnée desdits lests secondaires telle que l'enveloppe adopte ladite forme de cloche, de préférence de forme de calotte sphérique, de préférence encore hémisphérique.

Dans le procédé selon la présente invention on utilise une installation de captage d'une résurgence d'eau douce en mer, comportant un réservoir immergé en forme de cloche, de préférence de forme de calotte sphérique, de concavité tournée et ouverte vers le bas, et apte à piéger l'eau douce dans sa partie haute, et un système apte à prélever ladite eau douce caractérisé en ce que la circonférence de l'extrémité inférieure dudit réservoir et/ou la circonférence de l'extrémité inférieure d'une cheminée intérieure audit réservoir ouverte à sa partie supérieure et entourant au moins une partie, de préférence la totalité, de la résurgence d'eau douce, épouse(nt) le contour du relief du fond de la mer, de façon à assurer l'étanchéité entre le (ou les) dite(s) circonférence(s) et le fond de la mer.

Dans un mode réalisation, l'installation comporte une dite cheminée intérieure audit réservoir, ouverte à sa partie supérieure et entourant au moins une partie, de préférence la totalité de la résurgence d'eau douce, la circonférence de l'extrémité inférieure de ladite cheminée épousant le contour du relief au fond de la mer, de manière à assurer une étanchéité au niveau du fond de la mer.

L'installation comporte un réservoir constitué d'une enveloppe à double paroi, de préférence compartimentée, dans laquelle on a injecté un coulis de béton, de densité proche de 1, et dont la circonférence constituant l'extrémité inférieure du réservoir est étanche au niveau du fond de la mer.

Selon un second aspect de l'invention, une solution au problème posé est un procédé de détection, localisation et captage d'eau douce en mer dans lequel on effectue la détection et localisation du point de résurgence d'eau douce en effectuant les étapes suivantes :

- on mesure au moins la salinité de l'eau de mer en différents points d'une zone où l'on estime qu'il y a un potentiel raisonnable d'y trouver un point de résurgence sous marine d'eau douce, et
- si on obtient une différence, entre au moins une de ces valeurs de salinité et celle de l'eau de mer située hors de ladite zone, supérieure à un seuil donné, on en déduit que le fond de la mer, correspondant à ladite zone et au voisinage du point de la mesure de salinité différente relevée, comporte au moins un point de résurgence d'eau douce, procédé caractérisé en ce qu'on établit une cartographie de la salinité de l'ensemble de ladite zone avec un nombre suffisant de points de mesure aptes à permettre le tracé de courbes d'iso-salinité et on détermine les points de résurgence potentielle d'eau douce au centre de la courbe correspondant à la plus forte anomalie de salinité, lesdits points de mesure étant de préférence effectués en surface, de préférence encore à profondeur d'immersion sensiblement constante, de préférence en remorquant une sonde de salinité derrière un bateau.

Une fois une telle source ainsi détectée et localisée, on peut alors mettre en oeuvre les phases du procédé suivant l'invention permettant son captage, et tel qu'explicité précédemment.

La présente invention fournit donc de nouveaux procédés de détection, localisation et captage de sources d'eau douce en mer avec les installations correspondantes qui répondent bien au problème posé autorisant le pompage de l'eau douce en toute sécurité, même en cas de production simultanée de gaz contenu dans l'eau douce qui n'est pas possible avec un dispositif suivant le brevet cité précédemment, et permettant donc l'exploitation industrielle des résurgences sous marines d'eau douce . La présente invention devrait ainsi diminuer la pénurie d'eau douce des pays tels que ceux du bassin méditerranéen, et ce faisant contribuera a leur développement. Nous savons en effet, qu'il existe sur le pourtour de la Méditerranée, des résurgences sous marines d'eau douce d'origine, karstique : la Grèce seule recèle des réserves permettant une production annuelle en eau douce estimée à environ 2,5 milliards de mètres cubes et d'autres pays méditerranéens, dont la France, possèdent dans leurs eaux territoriales ce type de ressources en eau douce. Face à la raréfaction des ressources d'eau douce naturelle, à l'augmentation de sa consommation et donc à l'accroissement de son prix, la présente invention devrait permettre de répondre aux besoins des pays concernés.

On pourrait citer d'autres avantages à la présente invention mais ceux cités ci-dessus en montrent déjà suffisamment pour en prouver la nouveauté et l'intérêt.

La description ci après et les figures ci-jointes représentent des exemples de mise en oeuvre et de réalisation de l'invention.

La figure 1 est une vue en perspective d'ensemble d'un mode de réalisation d'une installation suivant l'invention avec cheminée intérieure.

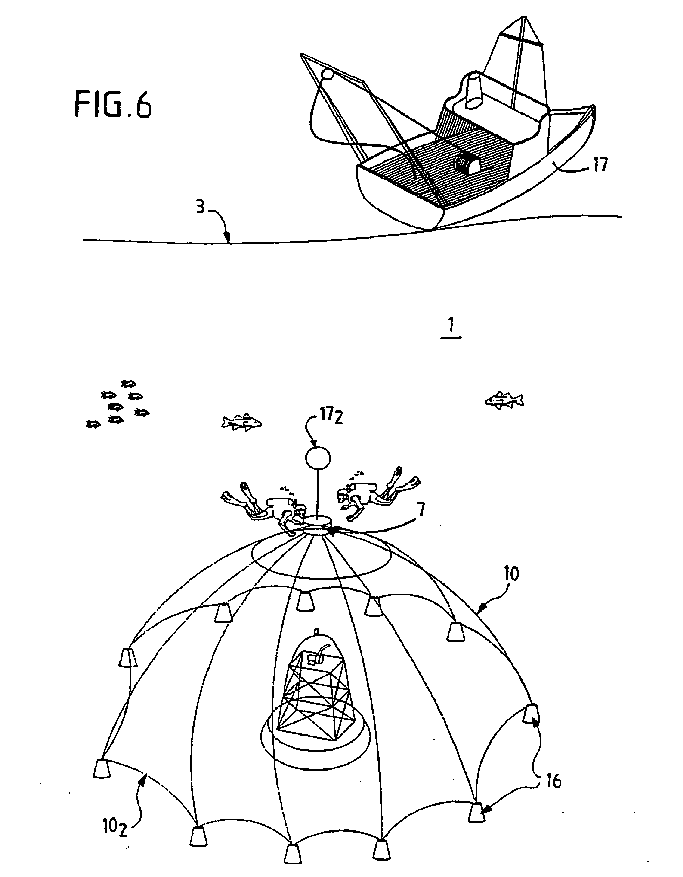

Les figures 2 à 7 représentent différentes phases du procédé de mise en place de l'installation suivant la figure 1.

La figure 8 est une vue en coupe simplifiée de l'installation de la figure 1

La figure 9 est une vue en perspective d'ensemble d'un champ de production d'eau douce.

La figure 10 est une vue de l'installation avec étanchéité à la base du réservoir et sans pompe.

La figure 11 est une vue de l'installation avec un système de recueillement d'eau douce à terre sous le niveau de la mer.

1) Procédé de détection

Les différentes phases de procédé de détection et de localisation ne sont pas représentées dans les figures ci-jointes car elles sont suffisamment explicitées ci-après et ne nécessitent pas d'être illustrés.

- on effectue un balayage systématique par voie aérienne d'une vaste étendue de mer, au cours duquel on relève les radiations émises par la surface de la mer dans l'infrarouge ; la thermographie infrarouge intéresse en fait une épaisseur de l'ordre d'une dizaine de microns à la surface de la mer et les longueurs d'ondes utilisées sont de l'ordre de 8 à 12 microns. Ces enregistrements thermiques sont effectués pendant la nuit à des altitudes de vol comprises entre 1500 et 2000 mètres, permettant un balayage de surface de 2.5 à 4km de large à chaque passage, et on les réalise à des périodes favorables en termes de débit de sources d'eau douce supposées ;
- on établit une cartographie thermique de la surface de cette étendue de mer et on détermine les zones de contraste thermique dans lesquelles on estime qu'il y a un potentiel raisonnable d'y trouver un point de résurgence d'eau douce ; cette première phase n'est pas cependant indispensable.
- on mesure au moins la salinité de l'eau de mer en différents points de toute zone où l'on estime qu'il y a un potentiel raisonnable d'y trouver un point de résurgence sous marine d'eau douce ; cette salinité peut être mesurée par calcul à partir de la connaissance de la conductivité et de la température de l'eau aux mêmes points de mesure, grâce par exemple à un "poisson" qui est un support d'instruments traîné par tout navire océanographique; les données de conductimétrie et de température relevées donnent alors en temps réel la salinité de l'eau par l'application d'une formule de conversion qui est par exemple :

$$S \approx 0,48273[1+1,2577(C-1)+9,3421.10^{-3}(C-1)^2-1,1297.10^{-4}(C-1)^3 + 7,5368.10^{-7}(C-1)^4]$$

avec

$$C = \frac{C°}{1+2,12.10^{-2}(\theta-20) + 6,66.10^{-5}(\theta-20)^2}$$

dans lequel S est la salinité, C la conductivité à 20°C en mS/cm et C° la conductivité à la température θ.

- si on obtient une différence, entre au moins une de ces valeurs de salinité et celle de l'eau de mer située hors de ladite zone, supérieure à un seuil donné, on en déduit que le fond de la mer, correspondant à ladite zone et au voisinage du point de la mesure de salinité différente relevée, comporte au moins un point de résurgence d'eau douce,
- on peut considérer que lorsqu'il y a une différence de 10‰ entre la salinité de la zone éloignée et celle de la zone d'étude, on se rapproche d'une résurgence d'eau douce, sachant que les valeurs de référence de l'eau douce à 20°C sont inférieures à 2 mS /cm pour la conductivité et 1,09‰ pour la salinité, et pour l'eau de mer à la même température de 20°C, 48mS/cm pour la conductivité et 35‰ pour la salinité ;
- de préférence on établit, grâce par exemple à l'utilisation d'un "poisson" remorqué tel qu'indiqué ci-dessus, une cartographie de la salinité de l'ensemble de ladite zone avec un nombre suffisant de points de mesure aptes à permettre le tracé de courbes d'iso-salinité et on détermine les points de résurgence potentielle d'eau douce au centre de la courbe correspondant à la plus forte anomalie de salinité ; le nombre de points de mesure est en fait fonction du pas de temps propre aux mesures effectuées par ledit poisson remorqué et de sa vitesse, sachant qu'à chaque point de mesure il est donné sa localisation précise par tout système de navigation tel que par satellite (dit Global Positionning System - GPS) ;

- pour obtenir une confirmation de la localisation précise de la source, on effectue ensuite au moins un prélèvement d'échantillon d'eau de mer au voisinage de chaque point de résurgence potentiel d'eau douce évalué précédemment et on y mesure directement au moins la salinité : cette mesure peut être effectuée par un plongeur à l'aide d'un salinimètre compact qui mesurera cette salinité en des points localisés sur un quadrillage de zones sur le fond de la mer ; dans certains cas de figure, cette localisation peut être faite visuellement par l'observation du plongeur car, au niveau de l'orifice de l'émergence et du flux ascendant, l'eau se trouble au niveau de l'interface entre l'eau douce et l'eau de mer. De toutes façons au moins un prélèvement est effectué au niveau d'une telle résurgence afin d'en connaître les caractéristiques physico-chimiques telles que sa minéralisation afin de définir si elle est potable.

De préférence, on visualise la présence d'eau douce en détectant la différence de densité entre l'eau douce et l'eau de mer à l'aide d'un sonar à balayage latéral remorqué à immersion constante derrière un bateau.

Pour les mesures de salinité, on remorque horizontalement une sonde à l'aide d'un navire à une profondeur d'immersion sensiblement constante, de préférence proche de la surface. Les mesures sont couplées à la position du navire lors de ladite mesure, grâce à un positionnement satellitaire GPS. L'intérêt d'une mesure en surface tient en ce que la superficie de la zone comprenant de l'eau douce est plus importante au fur et à mesure que l'on se rapproche de la surface, ceci étant dû à la diffusion de l'eau douce au fur et à mesure qu'elle se rapproche de la surface.

2) Procédé et installation de captage.

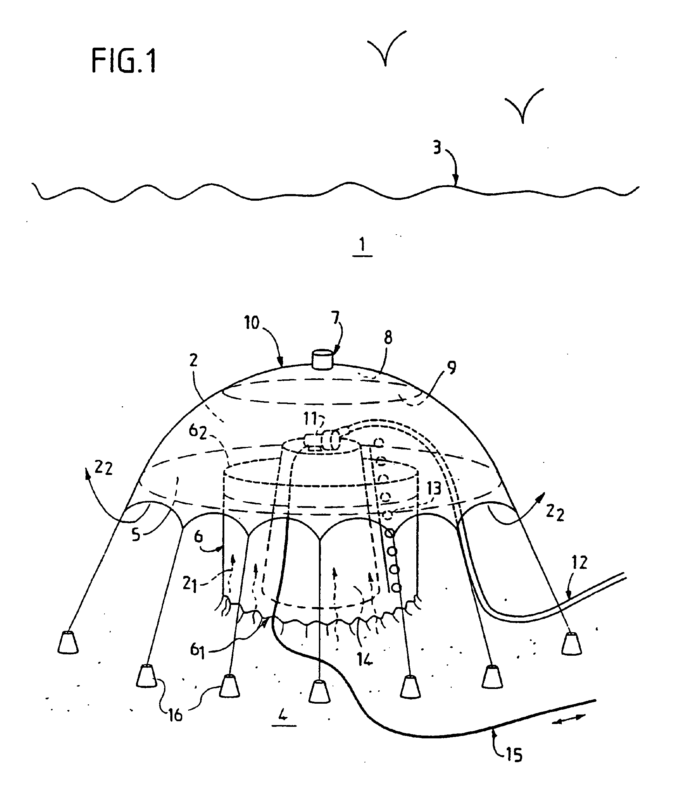

2.1 - Une installation de captage de résurgence d'eau douce en mer, tel que représentée sur la figure 1, comporte un réservoir immergé 10 en forme de cloche, de concavité tournée et ouverte vers le bas et piégeant ainsi l'eau douce 2 dans sa partie haute. Le niveau d'interface entre l'eau douce et l'eau de mer descend au fur et à mesure du remplissage. L'eau douce, en remplissant ledit réservoir en chasse l'eau de mer $2_2$ qui s'évacue par la partie basse $10_2$ du réservoir. Un système de pompage prélève ladite eau douce 2 grâce à une pompe 11 installée sur un socle 14 posé sur le fond 4 de la mer, à l'intérieur dudit réservoir 10, et refoule l'eau douce 2 à travers un conduit 12 d'évacuation.

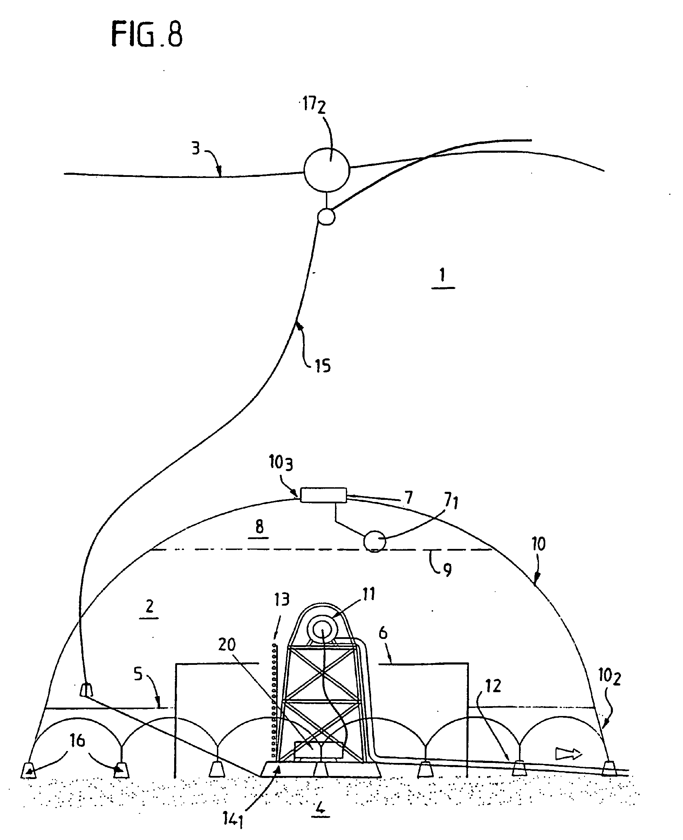

Ledit réservoir immergé 10 comporte en sa partie supérieure $10_3$ une soupape 7 d'échappement, qui est de préférence reliée à un flotteur $7_1$, tel que représenté sur la figure 8, prenant appui sur l'interface 9 entre tout gaz 8 accumulé à la partie supérieur du réservoir 10, et ladite eau douce 2, et qui ouvre la soupape 7 quand ladite interface 9 est en dessous d'un niveau donné.

Le réservoir 10 appelé "cloche" est de préférence constitué en polyéthylène translucide, dit polycristal, et ses dimensions sont rapportées aux dimensions et au débit de la zone de résurgence $2_1$ : il est en effet préférable que ladite cloche couvre l'ensemble de l'orifice de résurgence et que la pompe 11 soit asservie au débit de la source.

La taille du réservoir n'a en fait pas de limite et est fonction des caractères hydrologiques de la zone $2_1$ de résurgence à capter : à titre d'exemple, pour un captage ayant un débit d'eau douce d'environ 50 à 500 litres par seconde, la cloche 10 peut avoir un diamètre D à sa partie inférieure de sept mètres et un hauteur h de trois mètres.

A titre d'exemple, la source de résurgence de Port Miou située près de Cassis sur la cote méditerranéenne française, peut débiter de 3 à 100m$^3$/seconde selon ses conditions hydrologiques et représente un diamètre d'émergence d'une dizaine de mètres.

Ladite cloche 10 en matériau souple est maintenue sur le fond de la mer 4, grâce à des lests 16 dont le poids compense la force de la poussée d'Archimède qui s'exerce sur ledit réservoir 10, du fait de la différence de densité entre l'eau douce et l'eau de mer : pour l'exemple de cloche de 7 mètres de diamètre, de 3 mètres de hauteur indiquée ci dessus, on peut disposer de 24 lests 16 pesant 170 kg chacun environ en poids hors d'eau.

Pour bien capter ladite source 2 et éviter que l'eau douce ne se mélange avec l'eau de mer 1, l'installation suivant l'invention représentée figure 1 comporte une cheminée 6 intérieure audit réservoir 10, ouverte à sa partie supérieure $6_2$, entourant au moins une partie, de préférence la totalité, de la zone de résurgence $2_1$ d'eau douce, et enfermant le socle 14 qui supporte la pompe 11. La partie supérieure $6_2$ de la cheminée 6 arrive à un niveau tel que celui-ci se situe à l'intérieur du réservoir 10, c'est-à-dire au-dessus de l'extrémité inférieure $10_2$ du réservoir laquelle n'est pas étanche contrairement à la présente invention décrite au paragraphe 2.2. ci après.

La partie supérieure $6_2$, de ladite cheminée 6 peut être composée d'un cylindre, disposé en couronne et jouant le rôle de flotteur pour maintenir ladite cheminée bien verticale, surtout quand celle-ci est en matériau souple alors que sa partie inférieure $6_1$ est de préférence quasi étanche, au niveau du fond 4 de la mer. Pour cela, cette partie inférieure peut être composée d'un cylindre souple également, disposé en couronne et rempli de petites billes d'acier inoxydable afin d'épouser la surface du fond 4 et donc d'assurer cette étanchéité. Tout autre moyen d'étanchéité peut être utilisé, permettant que la circonférence de l'extrémité inférieure $6_1$ de la cheminée 6 suive le contour du relief du fond 4 de la mer où elle est mise en place. En particulier, on réalise une série de points d'ancrage au fond de la mer où l'on dispose des poids tels que des sacs de sable régulièrement répartis le long de ladite circonférence de l'extrémité inférieure $6_1$, ou encore ledit poids tel qu'un bourrelet de sable en couronne est continûment disposé le long de ladite circonférence, celle-ci étant coincée entre ledit poids et ledit fond de la mer.

De plus pour pouvoir commander la pompe 11 à bon escient, c'est à dire quand on est sûr que ladite pompe aspire de l'eau douce 2, l'installation suivant l'invention comporte une échelle de salinité 13 disposé verticalement à l'intérieur du réservoir 10 et qui permet de s'assurer que la pompe 11 puise bien de l'eau douce 2.

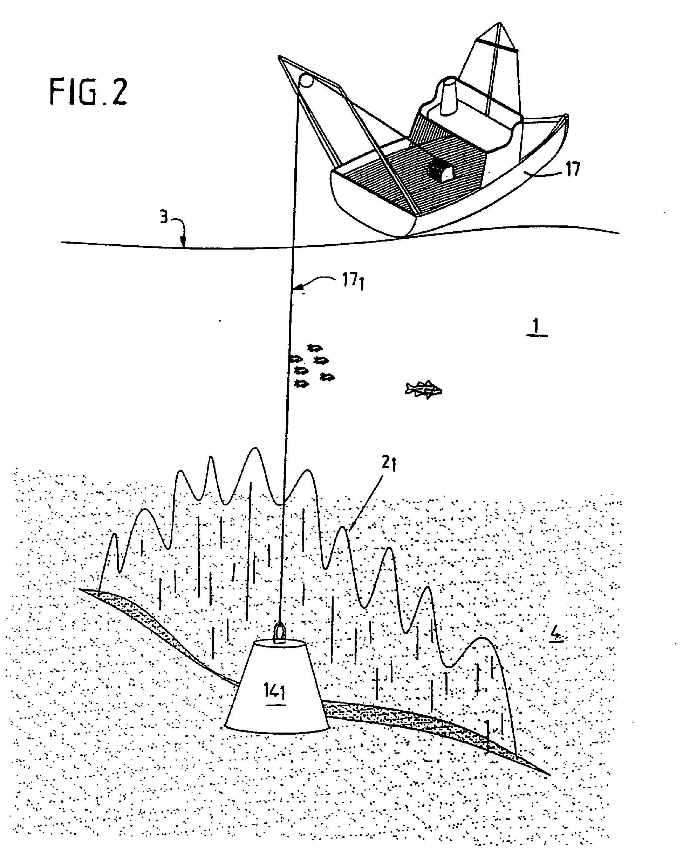

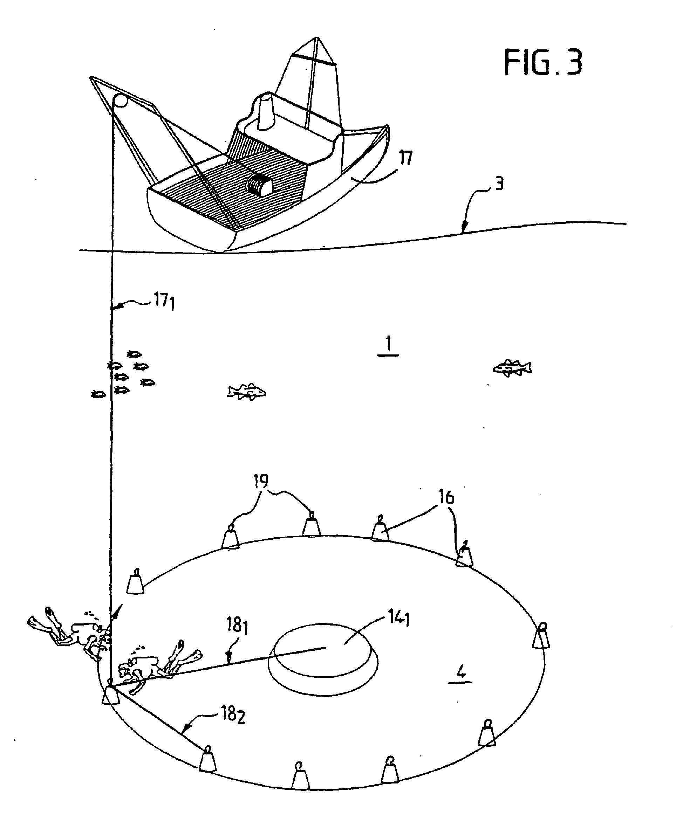

Pour effectuer l'installation dudit réservoir souple 10, on dispose au plus proche du point de résurgence d'eau douce $2_1$ localisé s .r le fond 4 de la mer 1 et tel que représenté sur la figure 2, un premier lest $14_1$ à partir duquel on positionne suivant la représentation de la figure 3, et à des distances données, tel que suivant un cercle, en utilisant des aussières $18_1$, $18_2$ de longueur donnée, d'autres lests secondaires 16 formant une ligne fermée autour du premier lest $14_1$ et de la zone ou point de résurgence d'eau douce $2_1$.

Une telle mise en place peut 'être assurée depuis un navire ou support d'assistance 17 placé à la surface 3 de la mer au dessus dudit point de résurgence, et à l'aide d'au moins un câble $17_1$ de mise à l'eau depuis un treuil embarqué.

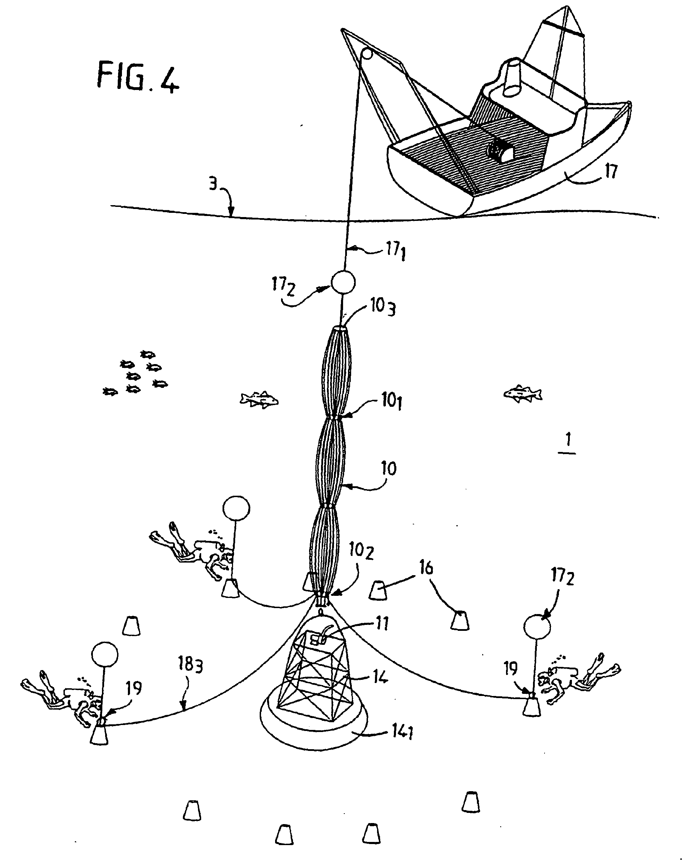

On installe ensuite sur ce premier lest $14_1$ une pompe 11 soit directement, soit sur une structure intermédiaire posée sur ledit lest, et on descend à sa verticale comme représenté sur la figure 4, le réservoir souple 10, en forme de cloche, fermé au moyen de liens $10_1$, lesté à sa partie basse $10_2$ et surmonté dans sa partie haute $10_3$ qui reste ouverte, par un flotteur $17_2$ lequel flotteur est relié audit câble de manoeuvre $17_1$.

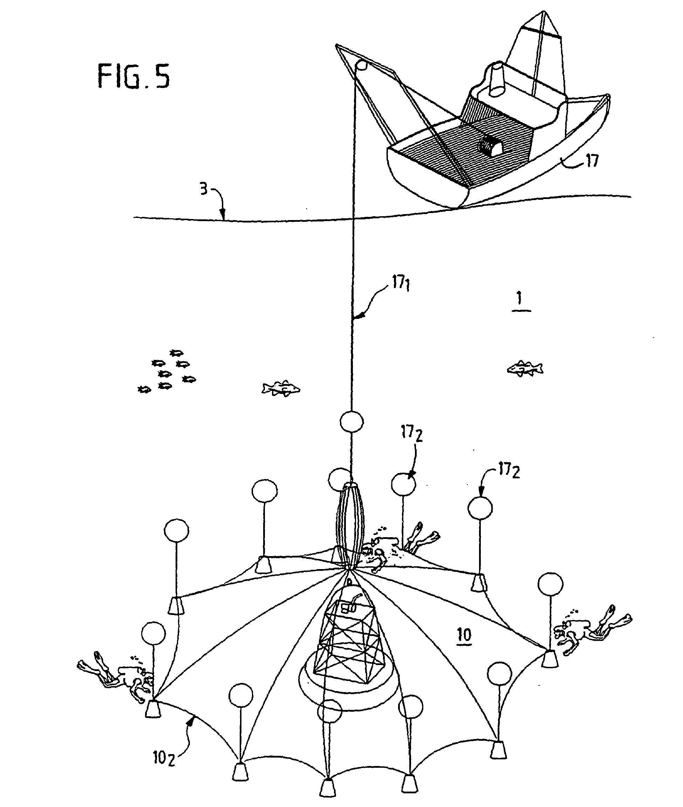

Des plongeurs peuvent alors fixer des élingues $18_3$ entre chaque lest secondaire 16 et la circonférence de la partie inférieure $10_2$ de la cloche 10 et déferler celle ci en tirant sur les élingues $18_3$. Les plongeurs peuvent s'aider par des flotteurs $17_2$ fixés en bout d'élingues $18_3$, qui sont passés à travers des anneaux 19 permettant d'une part l'accrochage et la mise en place des lests 16 et d'autre part ledit renvoi. On tire ainsi sur lesdites élingues $18_3$ jusqu'à ce que la circonférence de l'extrémité inférieure $10_2$ de la cloche 10 soit positionnée à une distance donnée desdits lests secondaires 16, et en défaisant au fur et à mesure les liens $10_1$ tel que représenté sur la figure 5.

On ferme alors la partie haute $10_3$ de la cloche 10 par la soupape 7 d'échappement, et on recueille, sous et dans le réservoir souple 10 ainsi installée, l'eau douce 2.

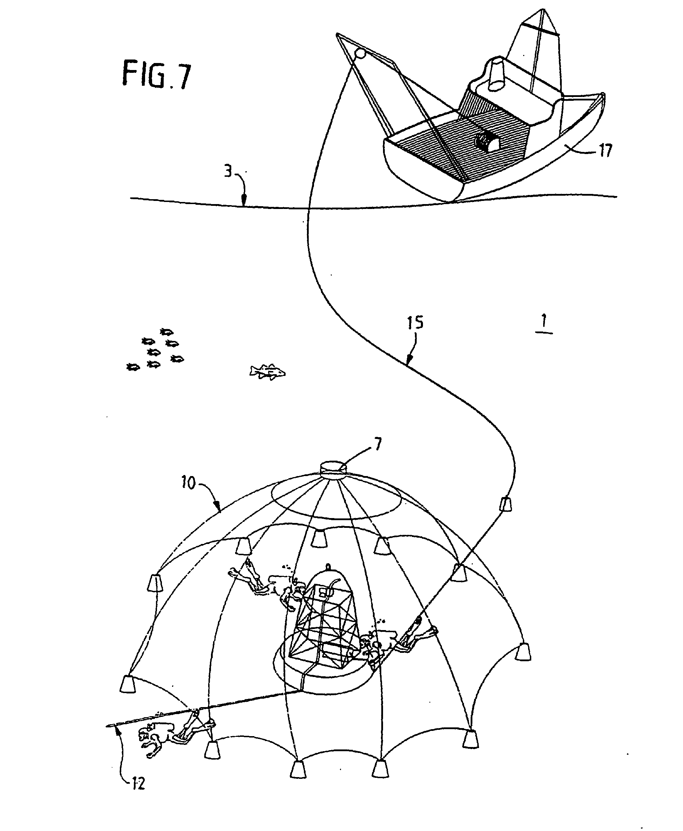

Les plongeurs peuvent alors raccorder la pompe 11 d'une part à la conduite de préférence flexible 12 d'évacuation de l'eau douce et d'autre part à une alimentation électrique 15, à travers un conteneur de puissance et de contrôle 20 de ladite pompe 11 et pouvant être installé sur le socle 14 de celle-ci, tel que représenté sur la figure 7.

Il est ensuite possible de mettre en place la cheminée 6 lestée dans le bas et munie de flotteurs dans le haut ; il peut également s'agir d'une cheminée rigide qui est alors mise en place avant le positionnement du réservoir 10.

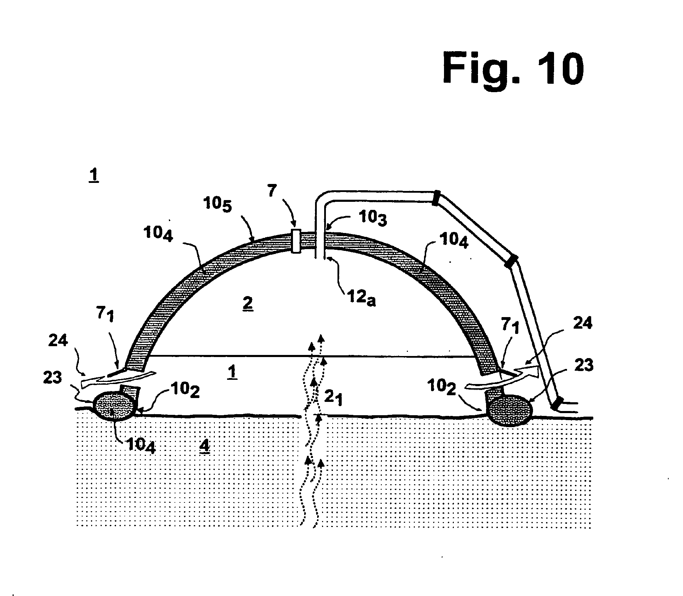

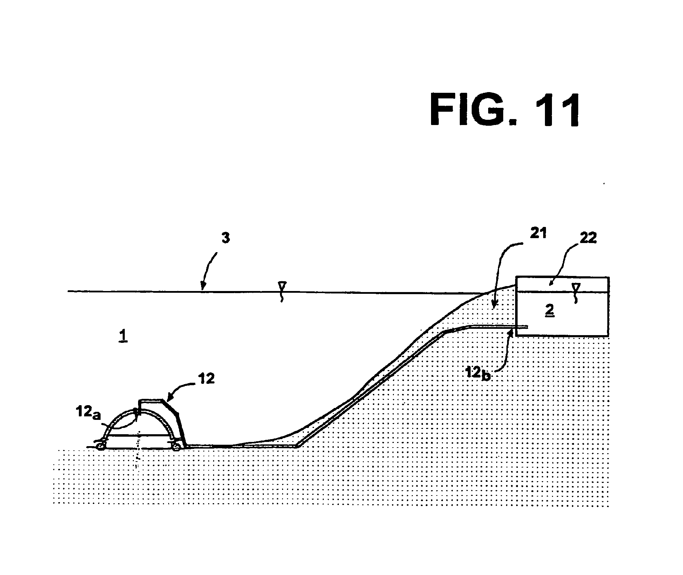

2.2 - Dans un autre mode de réalisation représenté schématiquement sur les figures 10 et 11, il est possible de ne pas utiliser de cheminée 6. Selon l'invention, on réalise une étanchéité à la base $10_2$ du réservoir 10. L'étanchéité à la base $10_2$ du réservoir 10 est réalisée en faisant en sorte que la circonférence de l'extrémité inférieure $10_2$ du réservoir suive le contour du relief du fond 4 de la mer où elle est implantée. On peut avoir recours pour ce faire aux mêmes moyens d'étanchéité que ceux décrits ci-dessus pour la cheminée 6, à savoir notamment la disposition d'ancrage et/ou de poids, notamment en forme de boudin 23 le long de la circonférence de l'extrémité inférieure $10_2$ du réservoir 10. An début de l'évacuation de l'eau douce sous le réservoir, celle-ci est mélangée à de l'eau de mer, puis, ultérieurement, lorsque toute l'eau de mer initialement sous le réservoir a été évacuée, de l'eau douce pure est recueillie car celle-ci n'est plus en contact avec l'eau de mer grâce à l'étanchéité réalisée.

Dans ce mode de réalisation avec étanchéité à la base du réservoir 10, il faut prévoir de préférence des soupapes $7_1$ avec clapet anti-retour permettant l'évacuation 24, dans un premier temps de l'eau de mer 1 puis du trop plein d'eau douce 2 à la partie inférieure du réservoir en cas de surpression qui pourrait contraindre la source d'eau douce, notamment lorsque le débit de remplissage d'eau douce est trop important par rapport à son débit d'évacuation.

Dans ce mode de réalisation, il est avantageux, pour conférer à l'installation une meilleure tenue mécanique dans le temps, d'utiliser comme réservoir une enveloppe à double paroi $10_5$, c'est-à-dire en forme de poche, dans laquelle on injecte un coulis de béton $10_4$, de densité proche de 1, quand le réservoir a pris sa forme de cloche, notamment de calotte sphérique de préférence hémisphérique, sous la pression de l'eau douce qui le remplit. La densité proche de 1 du béton $10_4$ permet que le réservoir conserve la forme géométrique en forme de cloche après le remplissage de la double enveloppe $10_5$. De préférence, l'enveloppe à double paroi ou poche $10_5$, est compartimentée de façon à permettre une bonne répartition du béton $10_4$ à l'intérieur de ladite poche. Dans un compartiment inférieur ayant la forme d'un boudin 23 ou dans un boudin 23 indépendant plaqué à l'extrémité inférieure $10_2$ du réservoir 10, on injecte un coulis de béton $10_5$ de densité supérieure à 1, en général environ 2,5. Ce béton $10_5$ de densité 2,5 en coulant à l'intérieur du boudin 23 à l'extrémité inférieure $10_2$ de l'enveloppe à double paroi $10_5$ va faire plaquer et épouser le contour du relief au fond de la mer 4 par ladite extrémité inférieure $10_2$ dudit réservoir, ce qui constitue une étanchéité ou un supplément d'étanchéité entre ledit réservoir et le fond de la mer. Le durcissement du béton confère au réservoir une tenue mécanique en cas d'environnement sous-marin agité.

Le système de recueillement de l'eau douce peut fonctionner comme mentionné précédemment avec ou sans pompe, et ce, dans les différents modes de réalisation de l'installation décrits ci-dessus. Pour fonctionner sans pompe, la conduite 12 d'évacuation de l'eau douce est connectée au réservoir 10 de telle sorte que l'extrémité 12a de la conduite débouchant dans le réservoir est en contact avec l'eau douce dans le réservoir. De préférence, cette extrémité 12a de la conduite 12 doit être en contact avec l'eau la plus douce qui se trouve dans la partie supérieure du réservoir. Pour ce faire, la conduite 12 peut être connectée à une extrémité 12a directement à une ouverture $10_3$ au sommet du réservoir 10, ou la conduite 12 peut passer sous l'extrémité inférieure $10_2$ du réservoir entre ladite extrémité et le fond de la mer, et remonter à l'intérieur du réservoir jusqu'au sommet.

L'autre extrémité 12b de la conduite 12 doit déboucher dans un deuxième réservoir ou conteneur 22 à terre 21, à un niveau d'altitude inférieur à celui du niveau de la mer. Ainsi, l'eau douce sera transférée vers le conteneur 22 en vertu des lois hydrauliques, notamment du principe dit de vases communicants. Nécessairement, le niveau d'altitude auquel débouche ladite autre extrémité de la conduite 12, doit être suffisamment en-dessous du niveau de la mer pour au moins compenser les pertes de charge dans la conduite. Ainsi, pour une conduite de 1 km, un débit de 1m/seconde et un diamètre de conduite de 1m, les pertes de charge sont de l'ordre de 1m. Dans ce cas, l'extrémité de la conduite 12 débouchant dans le conteneur 22 doit être à plus de 1m sous le niveau de la mer.

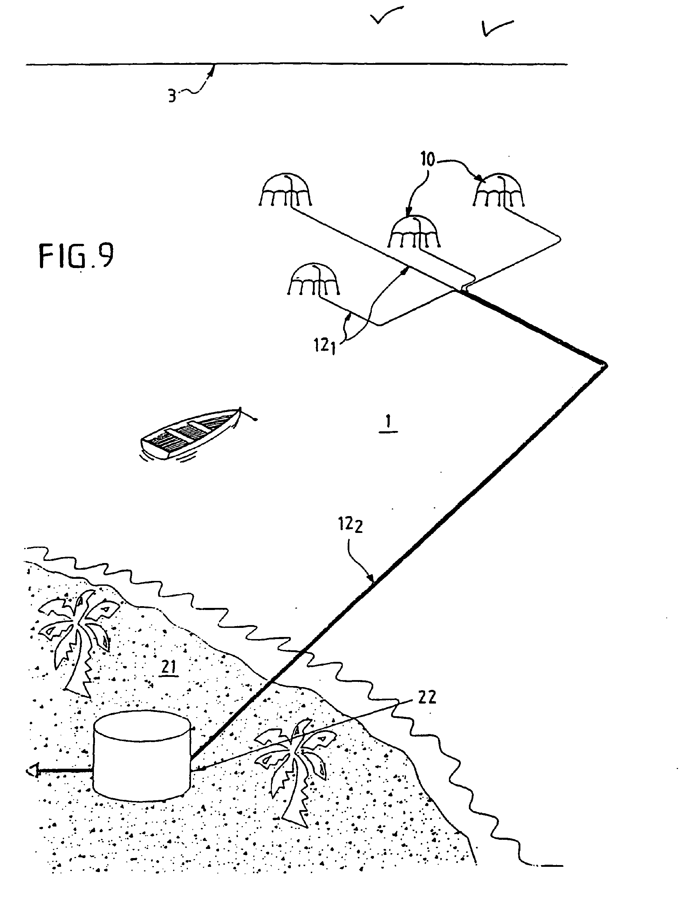

Dans le cas de plusieurs sources de résurgence situées dans une même zone au large de la terre ferme 21, on peut relier l'ensemble des évacuations $12_1$ d'eau douce à un pipeline collecteur $12_2$ permettant le remplissage d'un réservoir tampon 22 placé sur ladite terre ferme 21 et représenté sur la figure 9.

**Revendications**

1. Procédé de captage d'une résurgence d'eau douce en mer,
   **caractérisé en ce que** :

   - on utilise une installation comportant un réservoir immergé (10) de concavité tournée et ouverte vers le bas et apte à piéger l'eau douce (2), la circonférence de l'extrémité inférieure ($10_2$) dudit réservoir entourant ladite résurgence d'eau douce, et épousant le contour du relief du fond (4) de la mer de façon à assurer l'étanchéité entre ladite circonférence et le fond de la mer, ledit réservoir (10) étant constitué d'une enveloppe à double parois ($10_5$) dans laquelle on a injecté un coulis de béton ($10_4$), ayant une densité proche de 1 de manière à ce que l'enveloppe à double parois conserve une forme de calotte sphérique après le remplissage en béton, et
   - on prélève l'eau douce à l'aide d'une conduite (12) débouchant à sa première extrémité (12a) à l'intérieur du réservoir (10), de préférence dans la partie supérieure dudit réservoir et à sa deuxième extrémité (12b) dans une zone à terre située sous le niveau de la mer.

2. Procédé suivant la revendication 1, **caractérisé en ce** ladite enveloppe à double paroi compartimentée ($10_5$) comprend un compartiment inférieur en forme de boudin à l'extrémité inférieure ($10_2$) de l'enveloppe, dans lequel on a injecté un coulis de béton ($10_4$) de densité supérieur à 1, de préférence de densité de 2,5, de manière à ce que ledit boudin épouse le contour du relief au fond de la mer et réalise ladite étanchéité.

3. Procédé suivant la revendication 1 ou 2, **caractérisé en ce que** ledit réservoir comporte dans sa partie inférieure des soupapes ($7_1$) d'évacuation avec clapet anti-retour, et on évacue l'eau de mer ou le surplus d'eau douce lorsque le débit de remplissage du réservoir en eau douce est trop important par rapport au débit d'évacuation, à l'aide desdites soupapes ($7_1$).

4. Procédé selon l'une des revendications 1 à 3, **caractérisé en ce** ledit réservoir immergé (10) comporte à sa partie supérieure ($10_3$) une soupape (7) d'échappement, et on évacue tout gaz (8) accumulé à ladite partie supérieure du réservoir à l'aide de ladite soupape d'échappement (7).

5. Procédé selon la revendication 4, **caractérisé en ce que** ladite soupape d'échappement (7) est reliée à un flotteur prenant appui sur l'interface (9) entre tous gaz (8) accumulés à la partie supérieure du réservoir (10) et ladite eau douce (2), et qui ouvre la soupape d'échappement (7) quand ladite interface (9) est en dessous d'un niveau donné.

6. Procédé selon l'une des revendications 1 à 5, **caractérisé en ce qu'**on recueille l'eau douce à l'aide de ladite conduite d'évacuation et sans pompe.

7. Procédé selon la revendication 6, **caractérisé en ce que** ladite extrémité (12b) de la conduite d'évacuation d'eau douce (12) débouche dans un container (22) à terre (21) à un niveau d'altitude suffisamment inférieur à celui du niveau de la mer, pour au moins compenser les pertes de charges dans ladite conduite d'évacuation (12).

**8.** Procédé de captage de source d'eau douce en mer selon l'une des revendications 1 à 7, **caractérisé en ce qu'**on réalise les étapes dans lesquelles :

1/ on descend ledit réservoir sous forme pliée, ledit réservoir étant constitué d'une enveloppe souple à double paroi compartimentée ($10_5$),

2/ on déploie ledit réservoir qui prend une forme de calotte sphérique sous la pression de l'eau douce qui le remplit, et

3/ on réalise l'étanchéité de l'extrémité inférieure ($10_2$) dudit réservoir au fond de la mer, en faisant suivre le relief du fond de la mer par la circonférence de ladite extrémité inférieure, et

4/ on injecte un coulis de béton ($10_4$) dans les compartiments de ladite enveloppe à double paroi, ledit coulis de béton ($10_4$) ayant une densité proche de 1, de manière à ce que l'enveloppe à double paroi conserve la forme de calotte sphérique après le remplissage en béton, et

5/ on recueille l'eau douce à l'aide d'une conduite (12) débouchant à sa première extrémité (12a) à l'intérieur dudit réservoir et à sa deuxième extrémité (12b) dans une zone à terre située sous le niveau de la mer.

**9.** Procédé selon la revendication 8, **caractérisé en ce que** :

- on dispose à proximité d'un point de résurgence d'eau douce ($2_1$) localisé sur le fond (4) de la mer (1), un premier lest ($14_1$) à partir duquel on positionne à des distances données, d'autres lests secondaires (16) formant une ligne fermée autour du premier lest ($14_1$) et dudit point de résurgence d'eau douce ($2_1$) ;

- on descend à la verticale du premier lest ($14_1$) un réservoir souple (10) constitué d'une enveloppe apte à prendre une forme de calotte sphérique, de préférence ferlée au moyen de liens ($10_1$), et lesté à sa partie basse ($10_2$) ;

- on déploie ladite enveloppe, en dépliant, de préférence en déferlant celle-ci, jusqu'à ce que la circonférence de son extrémité inférieure ($10_2$) soit positionnée à une distance donnée desdits lests secondaires (16) pour que ladite enveloppe adopte ladite forme de calotte sphérique et,

- on réalise unedite étanchéité de l'extrémité inférieure ($10_2$) du réservoir (10) au niveau du fond de la mer.

**10.** Procédé selon la revendication 9, **caractérisé en ce que** lorsqu'on descend le réservoir (10) constitué d'une enveloppe apte à prendre une forme de calotte sphérique, ladite enveloppe est surmontée dans sa partie haute ($10_3$), qui reste ouverte, par un flotteur ($17_2$) et, lorsque ladite enveloppe est déployée pour que l'enveloppe adopte ladite forme de cloche, on ferme la partie haute ($10_3$) de la cloche (10) par une soupape (7) d'échappement, et on recueille sous le réservoir souple (10) ainsi installé, l'eau douce (2).

**11.** Procédé selon la revendication 10, **caractérisé en que** lorsque ledit réservoir souple constitué d'une enveloppe est descendu à la verticale du premier lest ($14_1$), sous forme ferlée, on fixe des élingues ($18_3$) entre chaque lest secondaire (16) et la circonférence de l'extrémité inférieure ($10_2$) de la cloche 10, et on déferle celle-ci en tirant sur les élingues ($18_3$) jusqu'à ce que ladite circonférence de l'extrémité inférieure ($10_2$) soit positionnée à une distance donnée desdits lests secondaires (16) telle que l'enveloppe adopte ladite forme de calotte sphérique.

**12.** Procédé de captage de source d'eau douce en mer selon l'une des revendications 1 à 11 dans lequel on effectue la détection et localisation du point de résurgence d'eau douce ($2_1$) en effectuant les étapes suivantes :

- on mesure au moins la salinité de l'eau de mer en différents points d'une zone où l'on estime qu'il y a un potentiel raisonnable d'y trouver un point de résurgence sous marine d'eau douce, et

- si on obtient une différence, entre au moins une de ces valeurs de salinité et celle de l'eau de mer située hors de ladite zone, supérieure à un seuil donné, on en déduit que le fond (4) de la mer, correspondant à ladite zone et au voisinage du point de la mesure de salinité différente relevée, comporte au moins un point de résurgence ($2_1$) d'eau douce, procédé **caractérisé en ce qu'**on établit une cartographie de la salinité de l'ensemble de ladite zone avec un nombre suffisant de points de mesure aptes à permettre le tracé de courbes d'iso-salinité et on détermine les points de résurgence potentielle d'eau douce ($2_1$) au centre de la courbe correspondant à la plus forte anomalie de salinité, lesdits points de mesure étant de préférence effectués en surface, de préférence encore à profondeur d'immersion sensiblement constante, de préférence en remorquant une sonde de salinité derrière un bateau.

**13.** Procédé selon la revendication 12, **caractérisé en ce qu'**on visualise la présence d'eau douce en détectant la différence de densité entre l'eau douce et l'eau de mer à l'aide d'un sonar à balayage latéral remorqué à immersion constante derrière un bateau.

**14.** Procédé selon l'une quelconque des revendications 12 ou 13, **caractérisé en ce que** préalablement :

- on effectue un balayage systématique par voie aérienne d'une vaste étendue de mer, au cours duquel on relève les radiations émises par la surface de la mer dans l'infrarouge ;
- on établit une cartographie thermique de la surface de cette étendue de mer et on détermine les zones dans lesquelles on estime qu'il y a un potentiel raisonnable d'y trouver un point de résurgence d'eau douce ($2_1$).

**Claims**

**1.** A method of collecting fresh water that is resurgent at sea, the method being **characterised in that**:

- an installation is used which comprises an immersed reservoir (10), with its open concave side facing downwards and suitable for trapping fresh water (2), the circumference of the bottom end ($10_2$) of said reservoir surrounding said fresh water resurgence, and fitting closely to the outline of the relief of the bottom (4) of the sea so as to provide leakproofing between said circumference and the bottom of the sea, said reservoir (10) being constituted by a double-walled envelope ($10_5$) into which there is injected a slurry of concrete ($10_4$) of specific gravity close to 1, so as to enable the double-walled envelope to retain a shape of spherical cap after it has been filled with concrete; and
- fresh water is collected by means of a pipe (12) with its first end (12a) opening out inside the reservoir (10), preferably into the top portion thereof and its second end (12b) opening out into a zone on land situated below sea level.

**2.** A method according to claim 1, **characterised in that** said double-walled envelope ($10_5$) that is subdivided into compartments comprises a bottom compartment forming a collar at the bottom end ($10_2$) of the envelope, into which there is injected a slurry of concrete ($10_4$) of specific gravity greater than 1, preferably of 2.5, such that said collar fits closely to the outline of the relief at the bottom of the sea and provides said leakproofing.

**3.** A method according to claim 1 or claim 2, **characterised in that** said reservoir has in its bottom portion non-return exhaust valves ($7_1$) and sea water or subsequently any surplus fresh water is evacuated by means of said valves ($7_1$) when the rate at which the reservoir is being filled with fresh water is too great compared with the rate at which fresh water is evacuated.

**4.** A method according to one of claims 1 to 3, **characterised in that** said immersed reservoir (10) has an escape valve (7) in its top portion ($10_3$), and any gas (8) that accumulates in said top portion of the reservoir is evacuated with said escape valve (7).

**5.** A method according to claim 4, **characterised in that** said escape valve (7) is connected to a float resting on the interface (9) between any gas (8) that accumulates in the top portion of the reservoir (10) and said fresh water (2), and serving to open the valve (7) when said interface (9) drops below a given level.

**6.** A method according to one of claims 1 to 5, **characterised in that** the fresh water is collected by means of said delivery pipe and without any pump.

**7.** A method according to claim 6, **characterised in that** said end (12b) of the fresh water delivery pipe (12) opens out into a container (22) on land (21) at an altitude that is far enough below sea level to compensate at least for head losses in said delivery pipe (12).

**8.** A method of collecting fresh water from a spring at sea according to one of claims 1 to 7, **characterised in that** the following steps are performed:

1/ said reservoir constituted by a double-walled flexible envelope ($10_5$) that is subdivided into compartments, is lowered in the folded state;
2/ said reservoir is deployed whereby it takes up the shape of a spherical cap under the pressure of the fresh water that fills it;
3/ the bottom end ($10_2$) of said reservoir is secured in leakproof manner to the bottom of the sea by causing the circumference of said bottom end to follow the relief of the bottom of the sea;
4/ a slurry of concrete ($10_4$) is injected in the compartments of said double-walled envelope, the specific gravity of said slurry of concrete ($10_4$) being close to 1 so as to enable the double-walled envelope to retain the shape of a spherical cap after it has been filled with concrete; and
5/ fresh water is collected by means of a pipe (12) with its first end (12a) opening out inside the reservoir and its second end (12b) into a zone on land situated below sea level.

9. A method according to claim 8, **characterised in that**:

    - a first weight ($14_1$) is placed close to a fresh water resurgence point ($2_1$) located on the bottom (4) of the sea (1), and secondary weights (16) are positioned at given distances relative thereto to form a closed line around the first weight ($14_1$) and said fresh water resurgence point ($2_1$);
    - a flexible reservoir (10) constituted by an envelope suitable for taking up the shape of a spherical cap, preferably furled by means of ties ($10_1$), and weighted at its bottom portion ($10_2$) is lowered vertically towards the first weight ($14_1$);
    - said envelope is deployed preferably by unfolding it, and more preferably by unfurling it, until the circumference of its bottom end ($10_2$) is located at a given distance from said secondary weights (16) so that said envelope takes up said shape of a spherical cap; and
    - the bottom end ($10_2$) of said reservoir (10) is secured in leakproof manner to the bottom of the sea.

10. A method according to claim 9, **characterised in that** when said reservoir (10) constituted by an envelope suitable for taking up the shape of a spherical cap is being lowered, the top portion ($10_3$) of said envelope, which remains open, is surmounted by a float ($17_2$), and when said envelope is deployed so as to adopt said bell-shape, the top portion ($10_3$) of the bell (10) is closed by an escape valve (7), and fresh water (2) is collected beneath the flexible reservoir (10) as installed in this way.

11. A method according to claim 10, **characterised in that** when said flexible reservoir constituted by an envelope is lowered vertically towards the first weight ($14_1$) in a furled configuration, sling lines ($18_3$) are fixed between each of the secondary weights (16) and the circumference at the bottom end ($10_2$) of the bell (10) and the bell is unfurled by pulling on the lines ($18_3$) until their circumference at the bottom end ($10_2$) is positioned at a given distance from said secondary weights (16) such that said envelope adopts said shape of a spherical cap.

12. A method of collecting fresh water from a spring at sea according to one of claims 1 to 11, in which the point of fresh water resurgence ($2_1$) is detected and located by performing the following steps:

    - at least the salinity of the sea water is measured at various points in a zone where it is believed that there is a reasonable chance of finding a fresh water resurgence point under the sea; and
    - if a difference is obtained between at least one of said salinity values and the value for sea water situated outside said zone, and if said difference is greater than a given threshold, it is deduced that the bottom (4) of the sea corresponding to said zone and in the vicinity of the point at which the different salinity measurement was taken includes at least one fresh water resurgence point ($2_1$), the method being **characterised in that** a chart of salinity for all of said zone is drawn up using a number of measurement points that is sufficient to enable iso-salinity curves to be plotted, and potential fresh water resurgence points ($2_1$) are determined as lying at the centres of curves corresponding to the greatest salinity anomalies, said measurement points preferably being taken from the surface, and more preferably still at a substantially constant depth of immersion, preferably by towing a salinity probe from a vessel.

13. A method according to claim 12, **characterised in that** the presence of fresh water is visualized by detecting the difference in density between fresh water and sea water by means of a side-scanning sonar towed at constant depth behind a vessel.

14. A method according to claim 12 or claim 13, **characterised in that** previously:

    - a vast extent of sea is surveyed systematically from the air, with the radiation emitted by the surface of the sea in the infrared being measured; and
    - a thermal chart of the surface of said extent of sea is drawn up and zones in which it is believed there is a reasonable chance of finding a fresh water resurgence point ($2_1$) are determined therefrom.

**Patentansprüche**

1. Verfahren zum Einfangen eines Austritts von Süßwasser im Meer, **dadurch gekennzeichnet, daß**:

   - man eine Anlage verwendet, die einen eingetauchten Behälter (10) mit nach unten gerichteter und geöffneter Konkavität und der zum Einfangen von Süßwasser (2) geeignet ist, umfaßt, wobei der Umfang des inneren Endes ($10_2$) des Behälters den Austritt von Süßwasser umgibt und sich der Kontur des Bodenreliefs (4) des Meeres derart anschmiegt, daß die Dichtheit zwischen dem Umfang und dem Meeresboden sichergestellt ist, wobei der Behälter (10) aus einer doppelwandigen Hülle ($10_5$) besteht, in die man einen Betonbrei ($10_4$) einer Dichte nahe 1 derart einspritzt, daß die doppelwandige Hülle eine Kugelglockenform nach Füllen mit Beton bewahrt, und
   man das Süßwasser mit einer Leitung (12) entnimmt, die an ihrem ersten Ende (12a) in den Behälter (10) mündet, vorzugsweise in dem oberen Teil des Behälters, und and ihrem zweiten Ende (12b) in eine Bodenzone mündet, die unter dem Meeresboden liegt.

2. Verfahren nach Anspruch 1, **dadurch gekennzeichnet, daß** die doppelwandige, kompartimentierte Hülle ($10_5$) ein unteres Kompartiment mit Wurstform am unteren Ende ($10_2$) der Hülle umfaßt, in das man den Betonbrei ($10_4$) mit einer Dichte größer als 1, vorzugsweise mit einer Dichte von 2,5, derart einspritzt, daß sich die Wurst der Kontur des Bodenreliefs des Meeres anschmiegt und die Dichtheit erzielt.

3. Verfahren nach Anspruch 1 oder 2, **dadurch gekennzeichnet, daß** der Behälter in seinem unteren Teil Antirücklaufventile ($7_1$) zum Abziehen umfaßt und man das Meerwasser oder den Überschuß an Süßwasser, wenn der Befüllungsdurchsatz des Behälters an Süßwasser zu hoch im Verhältnis zum Abzugsdurchsatz ist, mit Hilfe der Ventile ($7_1$) abzieht.

4. Verfahren nach einem der Ansprüche 1 bis 3, **dadurch gekennzeichnet, daß** der eingetauchte Behälter (10) an seinem oberen Teil ($10_3$) ein Auslaßventil (7) umfaßt und man sämtliches Gas (8), das am oberen Teil des Behälters angesammelt ist, mit Hilfe des Auslaßventils (7) abzieht.

5. Verfahren nach Anspruch 4, **dadurch gekennzeichnet, daß** das Auslaßventil (7) mit einem Schwimmer verbunden ist, der sich auf die Grenzfläche (9) zwischen sämtlichem Gas (8), das sich im oberen Teil des Behälters (10) angesammelt hat, und dem Süßwasser (2) stützt, und welcher das Auslaßventil (7) öffnet, wenn die Grenzfläche (9) unter einem vorgegebenen Pegel ist.

6. Verfahren nach einem Ansprüche 1 bis 5, **dadurch gekennzeichnet, daß** man das Süßwasser mit Hilfe der Abzugsleitung und ohne Pumpe sammelt.

7. Verfahren nach Anspruch 6, **dadurch gekennzeichnet, daß** das Ende (12b) der Abzugsleitung von Süßwasser (12) in einen Behälter (22) am Boden (21) auf einem Niveau ausreichender Höhe unter jener des Meeresbodens mündet, um wenigstens die Druckverluste in der Abzugsleitung (12) auszugleichen.

8. Verfahren zum Einfangen einer Süßwasserquelle im Meer nach einem der Ansprüche 1 bis 7, **dadurch gekennzeichnet, daß** man die Schritte ausführt, in denen:

   - 1/ man den Behälter in zusammengelegter Form hinab läßt, wobei der Behälter aus einer flexiblen Hülle mit kompartimentierter Doppelwand ($10_5$) besteht,
   - 2/ man den Behälter ausbreitet, der eine Kugelglockenform unter dem Druck des Süßwassers annimmt, das ihn füllt, und
   - 3/ man die Dichtheit des unteren Endes ($10_2$) des Behälters am Meeresboden verwirklicht, indem man mit dem Umfang des unteren Endes dem Relief des Meeresbodens folgt, und
   - 4/ man den Betonbrei ($10_4$) in die Kompartimente der doppelwandigen Hülle einspritzt, wobei der Betonbrei ($10_4$) eine Dichte nahe 1 hat, derart, daß die doppelwandige Hülle die Kugelglockenform nach Füllen mit Beton bewahrt, und
   - 5/ man das Süßwasser mit Hilfe einer Leitung (12) sammelt, die an ihrem ersten Ende (12a) in den Behälter mündet und an ihrem zweiten Ende (12b) in eine Bodenzone, die unter dem Meersboden liegt.

9. Verfahren nach Anspruch 8, **dadurch gekennzeichnet, daß**:

- man in der Nähe eines Süßwasseraustrittpunktes ($2_1$), der am Boden (4) des Meeres (1) angeordnet ist, einen ersten Ballast ($14_1$) anordnet, von dem aus man bei vorgegebenen Abständen andere Nebenballaste (16) anordnet, die eine geschlossene Linie um den ersten Ballast ($14_1$) und den Süßwasseraustrittpunkt ($2_1$) bilden;
- man zur Vertikalen des ersten Ballastes ($14_1$) einen flexiblen Behälter (10) hinabläßt, der aus einer Hülle besteht, die geeignet ist, eine Kugelglockenform anzunehmen, die vorzugsweise mittels Verbindungsmitteln ($10_1$) festgezurrt und an ihrem unteren Teil ($10_2$) belastet ist;
- man die Hülle vorzugsweise unter Festzurren von jener ausbreitet bis der Umfang ihres unteren Endes ($10_2$) bei einem vorgegebenen Abstand von den Nebenballasten (16) angeordnet ist, damit die Hülle die Kugelglokkenform annimmt, und
- man eine genannte Dichtheit des unteren Endes ($10_2$) des Behälters (10) auf der Ebene des Meeresbodens erzielt.

10. Verfahren nach Anspruch 9, **dadurch gekennzeichnet, daß** man den Behälter (10) hinabläßt, der aus einer Hülle besteht, die geeignet ist, eine Kugelglockenform anzunehmen, die Hülle in ihrem oberen Teil ($10_3$), der offen bleibt, überhöht ist durch einen Schwimmer ($17_2$) und, wenn die Hülle ausgefahren ist, damit die Hülle die Glockenform annimmt, man den oberen Teil ($10_3$) der Glocke (10) durch ein Auslaßventil (7) schließt und man unter dem flexiblen Behälter (10) so Süßwasser (2) installiert.

11. Verfahren nach Anspruch 10, **dadurch gekennzeichnet, daß**, wenn der flexible Behälter aus einer Hülle besteht und zur vertikalen des ersten Ballastes ($14_1$) hinab gelassen ist, in festgezurrter Form, man die Anschlaglasten ($18_3$) zwischen jedem Nebenballast (16) und dem Umfang des unteren Endes ($10_2$) der Glocke (10) befestigt und man jene unter Ziehen an den Anschlaglasten ($18_3$) festzurrt bis der Umfang des unteren Endes ($10_2$) bei einem vorgegebenen Abstand von den Nebenballasten (16) so angeordnet ist, daß die Hülle die Kugelglockenform annimmt.

12. Verfahren zum Einfangen einer Süßwasserquelle im Meer gemäß einem der Ansprüche 1 bis 11, bei dem man die Detektion und Lokalisation des Süßwasseraustrittpunktes ($2_1$) durchführt, indem man die folgenden Schritte ausführt:

- man mißt wenigstens die Salinität des Meerwassers an verschiedenen Punkten einer Zone, wo man vermutet, daß es dort ein vernünftiges Potential gibt, dort einen Punkt eines Austritts von Süßwasser unter dem Meer zu finden, und
- wenn man eine Differenz zwischen wenigstens einem dieser Salinitätswerte und jenem des außerhalb dieser Zone gelegenen Meerwassers, über einer vorgegebenen Schwelle erhält, folgert man, daß der Boden (4) des Meeres, welcher der entsprechenden Zone und der Nachbarschaft des Meßpunktes einer als unterschiedlich festgestellten Salinität entspricht, wenigstens einen Süßwasseraustrittpunktes ($2_1$) umfaßt, wobei das Verfahren **dadurch gekennzeichnet ist, daß** man eine Kartographie der Salanität der Gesamtheit der Zone mit einer ausreichenden Anzahl von Meßpunkten etabliert, die geeignet sind, die Verfolgung von Isosalinitätskurven zu erlauben, und man die potentiellen Süßwasseraustrittpunkte ($2_1$) im Zentrum der Kurve bestimmt, die der stärksten Salinitätsanomalie entspricht, wobei die Meßpunkte vorzugsweise an der Oberfläche, vorzugsweise noch bei wesentlichen konstanter Eintauchtiefe ausgeführt sind, vorzugsweise unter Schleppen einer Salinitätssonde hinter einem Schiff.

13. Verfahren nach Anspruch 12, **dadurch gekennzeichnet, daß** man die Gegenwart von Süßwasser visualisiert, indem man den Dichterunterschied zwischen dem Süßwasser und dem Meerwasser mit Hilfe eines Sonargerätes mit seitlicher Abtastung detektiert, das bei konstantem Eintauchen hinter einem Schiff hergeschleppt wird.

14. Verfahren nach einem der Ansprüche 12 oder 13, **dadurch gekennzeichnet, daß** zuvor:

- man eine systematische Abtastung über dem Luftweg von einem großen Meeresbereich durchführt, bei welcher man die Strahlen, die von der Meeresoberfläche in Infrarotbereich ausgesandt werden, mißt;
- man eine Wärmekartographie der Oberfläche dieses Meeresbereiches etabliert und man die Bereiche bestimmt, in denen vermutet wird, daß es dort ein vernünftiges Potential gibt, dort einen Süßwasseraustrittpunkte ($2_1$) zu finden.

FIG.1

FIG.2

FIG.3

FIG.4

FIG.5

EP 1 188 074 B1

FIG.6

18

**FIG.7**

# FIG.8

FIG.9

# Fig. 10

# FIG. 11